# EUROPÄISCHE PATENTSCHRIFT

(11) **EP 0 695 503 B1**
(45) Veröffentlichungstag und Bekanntmachung des Hinweises auf die Patenterteilung: **21.04.1999**
(21) Anmeldenummer: 95109851.6
(22) Anmeldetag: 23.06.1995
(51) Int. Cl.: A21B 3/04, A47J 27/04

(54) **Backofen zum Dampfgaren**
Oven for steam-cooking
Four pour cuire à la vapeur

(30) Priorität: 03.08.1994 DE 4427460
(43) Veröffentlichungstag der Anmeldung: 07.02.1996
(73) Patentinhaber: BSH Bosch und Siemens Hausgeräte GmbH, 81669 München (DE)
(72) Erfinder: Kieslinger, Michael, Dipl.-Ing., D-85354 Freising (DE); Zimmermann, Christian, Dipl.-Ing., D-84518 Garching/Alz (DE)

(56) Entgegenhaltungen:
- EP-A- 0 276 458
- EP-A- 0 396 470
- DE-A- 4 324 507

## Beschreibung

Die vorliegende Erfindung betrifft einen Backofen nach dem Oberbegriff des Anspruches 1.

Ein derartiger Backofen ist bekannt aus der DE-OS 34 41 767, wobei zum schnellen Dampferzeugen im Garraum darin eine erhitzbare Metallplatte vorgesehen ist, auf die aus einem Wassereinfüll- bzw. Vorratsbehälter Wasser aufgesprüht oder aufgetropft wird. Von einer frontseitigen, mit einer Ofentür verschließbaren Zugriffsöffnung aus erstrecken sich an gegenüberliegenden, senkrechten Seitenwänden das Garraumes waagrecht verlaufende Führungsschienen in die Tiefe des Garraumes. In diese Führungsschienen ist die als Verdampfungseinrichtung dienende Metallplatte eingeschoben. Für einen Garprozeß mit Dampfbehandlung des Gargutes wird die Metallplatte durch eine Fremdheizquelle oder durch die Garraumbeheizung auf eine Temperatur über dem Siedepunkt von Wasser aufgeheizt und so großflächig auf der mit Wasser versehenen Metallplatte im Garraum Dampf erzeugt. Nachteilig dabei ist, daß ein dem unteren Bereich des Garraums zugeordneter Unterhitze-Heizkörper durch die Metallplatte vom übrigen Garraum abgeschirmt ist, und somit ein Warmestau im Garraum unterhalb der Metallplatte hervorgerufen werden kann. Weiterhin beeinträchtigt die Metallplatte als Fremdkörper im Garraum die Funktion des Heizungssystems, das auf einen Betrieb ohne Metallplatte bzw. Dampfgaren ausgelegt ist.

Aus der DE-OS 41 16 425 ist eine Vorrichtung zum Erhitzen von Gargut bekannt, deren das Gargut aufnehmender und mit einer Tür verschließbarer Garraum sowohl mit einer regelbaren Garraumheizung beheizbar ist als auch mit Dampf von mindestens einem drucklosen Dampfgenerator versorgbar ist. Unter anderem ist in der Garraumtür ein druckloser Dampfgenerator mit einer eigenen elektrischen Heizung und einer Wassereinfüllöffnung angeordnet. Über eine Dampfzuführung leitet der Dampfgenerator erzeugten Dampf in den Garraum. Nachteilig dabei ist, daß die Verdampfungseinrichtung während einem Ofenbetrieb ohne Dampf der Bedien- bzw. Wartungsperson nicht zugänglich ist. Weiterhin macht die Unterbringung der Verdampfungseinrichtung in der Garraumtür zusätzliche Maßnahmen erforderlich, um die Außentemperatur an der Garraumtür auf ein zulässiges Maß reduzieren zu können. Auch erschweren die beengten Platzverhältnisse in der Garraumtür den Einbau der Verdampfungseinrichtung und des Wassereinfüllbehälters bzw. schließen den Einbau voluminöserer Verdampfungseinrichtungen oder Wassereinfüllbehälter grundsätzlich aus.

Aufgabe der vorliegenden Erfindung ist es deshalb, einen Backofen zum Dampfgaren bereitzustellen, wobei sowohl die Verdampfungseinrichtung als auch der Wassereinfüllbehälter für eine Bedien- bzw. Wartungsperson problemlos zugänglich sind. Dies soll auch während des Garbetriebes ohne Dampf möglich sein.

Erfindungsgemäß wird dies durch die kennzeichnenden Merkmale des Anspruchs 1 erreicht. Durch das Anordnen der Verdampfungseinrichtung außerhalb des Garraums und dem bei geöffneter wie bei geschlossener Garraumtür herausschiebbaren Haltern im Ofengehäuse ist eine problemlose Zugänglichkeit der Verdampfungseinrichtung und des Wassereinfüllbehälters gewährleistet. Nach Verschmutzung bzw. Verkalkung sind beide leicht reinigbar, bei einem Defekt ein geringer Montageaufwand und damit verbunden geringe Kundendienstkosten erreicht. Zusätzlich ist weder beim Garen ohne Dampf noch mit Dampf die Temperaturverteilung im Garraum durch die Verdampfungseinrichtung beeinträchtigt.

Gemäß einer bevorzugten Weiterbildung ist sowohl die Verdampfungseinrichtung als auch der Wassereinfüllbehälter unterhalb des Garraums angeordnet. Im Bereich unterhalb des Garraums handelt es sich im Unterschied zum Schalter-Frontbereich im oberen Bereich des Backofens um einen temperaturunkritischen Bereich und in der Regel um einen Bereich mit erhöhtem Platzangebot. Eine aufwendige zusätzlche Kapselung der Elektronik im Schalter-Frontbereich kann durch die erfindungsgemäße Anordnung der Verdampfungseinrichtung entfallen.

Vorteilhafterweise ist die Verdampfungseinrichtung gemäß einem anderen Unteranspruch mit einem Schnellverschluß-Deckel ausgestattet. Durch das Verschließen der Verdampfungseinrichtung mit einem Deckel erübrigt sich zum einen die aufwendige Abdichtung der Verdampfungseinrichtung von Bereichen im Backofen, die gegen Dampf geschützt werden müssen, und zum anderen die Abdichtung des Backofens nach außen. Weiterhin ermöglicht der Schnellverschluß-Deckel ein rasches Zugänglichmachen der eigentlichen Verdampfungseinrichtung.

Gemäß einer anderen vorteilhaften Ausführungsform sind die Verdampfungseinrichtung und der Wasseieinfüllbehälter gemeinsam in einem im Ofengehäuse einschiebbaren Ofenschubkasten angeordnet. So kann auf einen Griff das komplette Dampferzeugungssystem (Verdampfungseinrichtung, Wassereinfüllbehälter) aus dem Ofengehäuse entfernt und gereinigt bzw. ausgetauscht werden. Vorteilhafterweise ist der Ofenschubkasten mit einem Schnellverschluß-Schubkastendeckel ausgestattet. So ergeben sich dieselben Vorteile wie beim obigen Schnellverschluß-Deckel für das komplette Dampferzeugungssystem.

Vorteilhafterweise ist der Verdampfungseinrichtung eine von der Bedienperson ablesbare Füllstandsanzeige zugeordnet. Um in der Verdampfungseinrichtung befindliches Wasser bei Bedarf ablaufen lassen zu können, ist in deren unterem Bereich vorteilhafterweise die Füllstandsanzeige abziehbar aufgesteckt.

Gemäß einer anderen vorteilhaften Weiterbildung ist ein Dampfzuleitungsrohr, das die Verdampfungseinrichtung und den Garraum verbindet, verschließbar. Dadurch ist der erfindungsgemäße Backofen auch ohne Dampferzeugungssystem ausstattbar und kann bei einem entsprechenden Kundenwunsch problemlos nachgerüstet werden.

Nachfolgend sind anhand schematischer Darstellungen zwei Ausführungsbeispiele des erfindungsgemäßen Backofens beschrieben. Es zeigen:

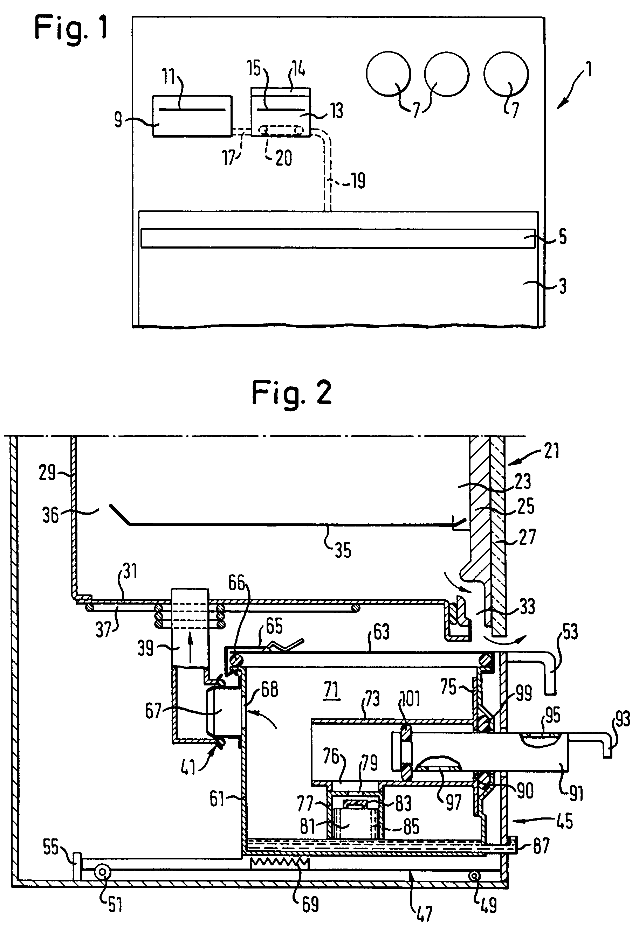

- Fig. 1: Vereinfacht eine Frontansicht eines oberen Bereichs eines Backofens gemäß dem ersten Ausführungsbeispiel und
- Fig. 2: in einer Teilschnitt-Darstellung den unteren Bereich eines Backofens gemäß dem zweiten Ausführungsbeispiel.

Ein Backofen 1 ist auf seiner Vorderseite mit einer herausklappbaren Garraumtür 3 versehen. Durch Ziehen an einem an der Garraumtür 3 befestigten Griff 5 wird der dahinter befindliche Garraum (nicht gezeigt) der Bedienperson zugänglich. Im oberen Bereich der Frontseite des Backofens 1 sind verschiedene Anzeige- und Bedienungselemente 7 angeordnet. Oberhalb der Tür 3 ist der Backofen in dessen Frontbereich mit einer in den Backofen einschiebbaren und herausziehbaren Wasserschublade 9 mit einen Schubladengriff 11 ausgestattet. Daneben ist eine Dampferzeugungs-Schublade 13, die mit einem Deckel 14 dampfdicht abschließbar ist, angeordnet. An der Schublade 13 ist ein Dampferzeugungs-Schubladengriff 15 befestigt. Die Wasserschublade 9 steht mit der Dampferzeugungs-Schublade 13 über eine Wasserzufuhrleitung 17 in Verbindung. Die Dampferzeugungsschublade 13 steht mit dem Garraum (nicht gezeigt) über eine flexible Dampfleitung 19 in Verbindung. Weiterhin befindet sich in der Dampferzeugungs-Schublade 13 ein Heizkörper. Zum Dampfgaren befüllt die Bedienperson die Wasserschublade 9 zunächst mit Wasser und stellt an einem der Bedienelemente 7 die Funktion Dampfgaren ein. Entsprechend dieser Einstellung erzeugt die Heizung in der Dampferzeugungs-Schublade 13 den gewünschten Dampf, welcher über die flexible Dampfleitung 19 dem Garraum zugeführt wird. Zur Reinigung bzw. Wartung können die beiden Schubladen 9, 13 herausgezogen werden.

In Fig. 2 ist das zweite Ausführungsbeispiel eines Backofens 21 gezeigt. Ein Garraum 23 ist umgeben von einer Garraumdecke (nicht gezeigt), einer Garraumtür 25, die mit einer Frontglasscheibe 27 versehen ist, einer Garraumrückwand 29 und einem Garraumboden 31. Im unteren, vorderen Bereich des Garraums 23 befindet sich unterhalb eines Vorsprungs der Garraumtür 25 ein Wrasenauslaß 33, der den Garraum 23 mit dem Raum außerhalb des Backofens 21 verbindet. Im Garraum ist ein Backofenblech 35 derart eingeschoben, daß ein Dampfkanal 36 zwischen dem Blech 35 und der Garraumrückwand 29 ausgebildet ist. Außerhalb des Garraums 23 ist dem Garraumboden 31 ein Unterhitze-Heizkörper 37 zugeordnet, der zugleich wärmetechnisch an ein Dampfzuleitungsrohr 39 angekoppelt ist. Das Dampfzuleitungsrohr 39 weist an einem Endabschnitt eine Austrittsöffnung innerhalb des Garraums 23 und am entgegengesetzten Endabschnitt eine Dampfeintrittsöffnung auf. Zugleich ist an diesem Ende des Dampfzuleitungsrohrs 39 eine Dampfkupplung 41 angeordnet.

Ein Dampferzeugungssystem 45 ist in dem unter dem Garraum 23 befindlichen Innenraum des Backofens 21 in einen herausziehbaren Ofenschubkasten 47 untergebracht. Dieser ist über eine gehäusefeste erste Rolle 49 und eine im hinteren Bereich des Ofenschubkastens 47 an diesem drehbar befestigte zweite Rolle 51 durch Ziehen oder Schieben an einem Ofen-Schubkastengriff 53 verschiebbar. Zur Begrenzung des Einschiebens des Ofenschubkastens 47 in den Backofen 21 dient ein gehäusefester Anschlag 55. Im Ofenschubkasten 47 ist ein oben offenes, kastenförmiges Verdampfungsbehältnis 61 angeordnet, das durch einen Deckel 63 mit Hilfe eines mechanischen Schnellverschlusses 65 dampfdicht verschließbar ist. Zur Verbesserung der Abdichtung ist eine ringförmige Deckeldichtung 66 zwischen dem Deckel 63 und dem Verdampfungsbehältnis 61 eingelegt. An das Verdampfungsbehältnis 61 ist im hinteren oberen Bereich ein Dampfkupplungsrohr 67 angeflanscht, das eine Dampfaustrittsöffnung 68 des Verdampfungsbehältnisses 61 mit dem Dampfzuleitungsrohr 39 und damit mit dem Garraum verbindet. An der Unterseite des Bodens des Verdampfungsbehältnisses 61 ist eine Dampfheizung 69 befestigt, die mit der gehäusefesten Elektronik (nicht gezeigt) über flexible Leitungen verbunden ist. Das Verdampfungsbehältnis 61 und der Deckel 63 definieren zusammen einen Verdampfungsraum 71, in dem ein Wasserschubladen-Führungsrohr 73 angeordnet ist. Das Führungsrohr 73 ist über einen Flansch 75 an der Innenwandung des Verdampfungsbehältnisses 61 befestigt und erstreckt sich horizontal in den Verdampfungsraum 71. Im hinteren Bodenbereich des Wasserschubladen-Führungsrohrs 73 weist dieses eine Wasserablauföffnung 76 auf. Diesem ist ein vertikal angeordnetes Schwimmer-Führungsrohr 77 mit einer Wasserzulauföffnung 79 zugeordnet. Im unten offenen Schwimmer-Führungsrohr 77 ist ein im wesentlichen zylindrischer Schwimmer 81 vertikal verschiebbar geführt. Der Schwimmer 81 ist an dessen Schwimmerkopf mit einer Schwimmerdichtung 83 ausgestattet, deren Abmaße auf die Größe der Wasserzulauföffnung 79 des Wasserschubladen-Führungsrohrs 73 abgestimmt sind. Im ansonsten massiven Körper des Schwimmers 81 sind eine Anzahl von vertikal verlaufenden Wasserkanälen 85 vorgesehen, die den Schwimmer durchdringen und es an der Schwimmerdichtung 83 vorbeilaufenden Wasser ermöglichen, den Schwimmer 81 zu durchqueren und in den unteren Bereich des Verdampfungsraums zu gelangen. Zusätzlich kann dieses Wasser auch zwischen der Außenwandung des Schwimmers 81 und der Innenwandung des Schwimmer-Führungsrohrs 77 abfließen. Der Wasserpegel im Verdampfungsbehältnis 61 wird durch eine Füllstandsanzeige 87 angezeigt. Dazu ist ein im wesentlichen L-förmiges Rohr in unteren Bereich des Verdampfungsbehältnisses 61 drehbar aufgesteckt.

Im Bereich des Flansches 75 weist das Wasserschubladen-Führungsrohr 73 eine Aufnahmeöffnung 90 zum horizontalen Einschieben einer Wasserschublade 91 in das Wasserschubladen-Führungsrohr 73 auf. An der Wasserschublade 91 ist ein Wasserschubladengriff 93 befestigt. Weiterhin ist die Wasserschublade 91 in ihrem vorderen oberen Bereich mit einer Wassereinfüllöffnung 95 und in ihrem hinteren unteren Bereich mit einer Wasserablauföffnung 97 ausgestattet. Die Wasserschublade 91 ist ansonsten geschlossen. Zwischen der Wasserschublade 91 und dem Verdampfungsbehältnis 61 einerseits und dem Wasserschubladen-Führungsrohr 73 andererseits sind erste und zweite Dichtungen 99, 101 angeordnet.

Die Funktion des Backofens ist wie folgt:

Die Bedienperson zieht die Wasserschublade 91 aus dem Ofenschubkasten 47 heraus und befüllt die Wasserschublade 91 durch die Wassereinfüllöffnung 95. Danach schiebt die Bedienperson die Wasserschublade 91 wieder in die Ausgangsstellung in den Backofen 21 zurück. Das in der Wasserschublade 91 befindliche Wasser kann zunächst durch die Wasserablauföffnung 97 der Wasserschublade und die Wasserzulauföffnung 79 des Wasserschubladen-Führungsrohrs 73 durch die Wasserkanäle 85 bzw. am Schwimmer 81 vorbeifließen und sammelt sich am Boden des Verdampfungsbehältnisses 61. Bei steigendem Wasserspiegel wird der Schwimmer 81 angehoben und verschließt über seine Dichtung 83 bei einem definierten Wasserpegel im Verdampfungsbehältnis 61 die Wasserzulauföffnung 79 des Wasserschubladen-Führungsrohrs 73. Die Wasserzufuhr in das Verdampfungsbehältnis 61 ist gestoppt. Bei Bedarf wird die Dampfheizung 69 eingeschaltet und das Wasser verdampft. Der erzeugte Dampf entweicht über die Dampfaustrittsöffnung 68 aus dem Verdampfungsbehältnis 61 durch das Dampfkupplungsrohr 67 in das Dampfzuleitungsrohr 39 und in den Garraum 23. Wenn es gewünscht ist, kann der Dampf im Bereich des Unterhitze-Heizkörpers 31 durch diesen überhitzt werden. Der Dampf steigt im Garraum aufgrund des geringeren spezifischen Gewichts nach oben, so daß aus dem Wrasenauslaß 33 erst Dampf ausströmt, wenn der gesamte Garraum 23 mit Dampf gefüllt ist. Die Dampfzufuhr wird dann gestoppt.

Zur Reinigung des Dampferzeugungssystems 45 wird dieses vollständig aus dem Backofen herausgezogen. Dabei löst sich die Verdampfungseinrichtung 45 bzw. das Dampfkupplungsrohr 67 vom gerätefesten Dampfzuleitungsrohr 39 und somit rollt der Ofenschubkasten 47 über die Rollen 49, 51 aus dem Backofen 21. Durch Öffnen des Deckels 63 sind alle Einzelelemente im wesentlichen gut zugänglich und reinigbar. So kann beispielsweise der Boden des Verdampfungsbehältnisses 61 gereinigt bzw. der Schwimmer 81 bzw. dessen Dichtung 83 entnommen werden. Beim Hineinschieben des Ofenschubkastens 47 in den Backofen 21 wird die Verbindung zum Garraum 23 wieder über die Dampfkupplung 41 hergestellt.

## Patentansprüche

1. Backofen mit einer Verdampfungseinrichtung (13, 45) zum Dampfgaren in einem mit einer Garraumtür (3, 25) verschließbaren Garraum (23), wobei ein die Verdampfungseinrichtung speisender Wassereinfüllbehälter (9, 91) herausschiebbar im Ofengehäuse gehalten ist, **dadurch gekennzeichnet,** daß die Verdampfungseinrichtung (13, 45) außerhalb des Garraums (23) angeordnet und bei geöffneter sowie geschlossener Garraumtür (3, 25) herausschiebbar im Ofengehäuse gehalten ist.

2. Backofen nach Anspruch 1, dadurch gekennzeichnet, daß sowohl die Verdampfungseinrichtung (45) als auch der Wassereinfüllbehälter (91) unterhalb des Garraums (23) angeordnet sind.

3. Backofen nach einem der vorhergehenden Ansprüche, dadurch gekennzeichnet, daß die Verdampfungseinrichtung (13) mit einem Schnellverschluß-Deckel (14) ausgestattet ist.

4. Backofen nach einem der vorhergehenden Ansprüche, dadurch gekennzeichnet, daß die Verdampfungseinrichtung (45) und der Wassereinfüllbehälter (91) gemeinsam in einem im Ofengehäuse einschiebbaren Ofenschubkasten (47) angeordnet sind.

5. Backofen nach Anspruch 4, dadurch gekennzeichnet, daß der Ofenschubkasten (47) mit einem Schnellverschluß-Schubkastendeckel (63, 65) ausgestattet ist.

1. Backofen nach einem der vorhergehenden Ansprüche, dadurch gekennzeichnet, daß der Verdampfungseinrichtung (45) eine Füllstandsanzeige (87) zugeordnet ist.

2. Backofen nach Anspruch 6, dadurch gekennzeichnet, daß die Füllstandsanzeige (87) im unteren Bereich der Verdampfungseinrichtung (45) abziehbar aufgesteckt ist.

3. Backofen nach einem der vorhergehenden Ansprüche, dadurch gekennzeichnet, daß ein die Verdampfungseinrichtung (13, 45) und den Garraum (23) verbindendes Dampfzuleitungsrohr (39) verschließbar ist.

## Claims

1. Baking oven with an evaporator device (13, 45) for cooking by steam in a cooking chamber (23) closable by a cooking chamber door (3, 25), wherein a water filling container (9, 91) supplying the evaporator device is held in the oven housing to be slidable out, characterised in that the evaporator device (13, 45) is arranged outside the cooking chamber (23) and is held in the oven housing to be slidable out when the cooking chamber door (3, 25) is open as well as closed.

2. Baking oven according to claim 2, characterised in that both the evaporator device (45) and the water filling container (91) are arranged below the cooking chamber (23).

3. Baking oven according to one of the preceding claims, characterised in that the evaporator device (13) is equipped with a quick-closure cover (14).

4. Baking oven according to one of the preceding claims, characterised in that the evaporator device (45) and the water filling container (91) are arranged in common in an oven drawer (47) pushable into the oven housing.

5. Baking oven according to claims 4, characterised in that the oven drawer (47) is equipped with a quick-closure drawer cover (63, 65).

6. Baking oven according to one of the preceding claims, characterised in that the evaporator device (45) is associated with a filling state indicator (87).

7. Baking oven according to claim 6, characterised in that the filling state indicator (87) is plugged on in the lower region of the evaporator device (45) to be able to be pulled out.

8. Baking oven according to one of the preceding claims, characterised in that a steam feed pipe (39) connecting the evaporator device (13, 45) and the cooking chamber (23) is closable.

## Revendications

1. Four comprenant un dispositif de vaporisation (13, 45) afin de cuire à la vapeur dans un espace de cuisson (23) pouvant être fermé par une porte (3, 25) d'espace de cuisson, un récipient de remplissage d'eau (9, 91) qui alimente le dispositif de vaporisation étant maintenu dans le boîtier du four d'une manière permettant de le sortir, caractérisé en ce que le dispositif de vaporisation (13, 45) est situé à l'extérieur de l'espace de cuisson (23) et est maintenu dans le boîtier du four d'une manière permettant de le sortir aussi bien quand la porte (3, 25) de l'espace de cuisson est ouverte que quand elle est fermée.

2. Four selon la revendication 1, caractérisé en ce que non seulement le dispositif de vaporisation (45), mais également le réservoir de remplissage d'eau (91), sont situés au-dessous de l'espace de cuisson (23).

3. Four selon l'une des revendications précédentes, caractérisé en ce que le dispositif de vaporisation (13) est muni d'un couvercle (14) à fermeture rapide.

4. Four selon l'une des revendications précédentes, caractérisé en ce que le dispositif de vaporisation (45) et le récipient de remplissage d'eau (91) sont situés tous les deux dans un tiroir de four (47) pouvant être enfoncé dans le boîtier du four.

5. Four selon la revendication 4, caractérisé en ce que le tiroir de four (47) est muni d'un couvercle de tiroir (63, 65) à fermeture rapide.

6. Four selon l'une des revendications précédentes, caractérisé en ce qu'un indicateur de niveau de remplissage (87) est associé au dispositif de vaporisation (45).

7. Four selon la revendication 6, caractérisé en ce que l'indicateur de niveau de remplissage (87) est emboîté de manière amovible dans la région inférieure du dispositif de vaporisation (45).

8. Four selon l'une des revendications précédentes, caractérisé en ce qu'un tuyau d'amenée de la vapeur (39) reliant le dispositif de vaporisation (13, 45) et l'espace de cuisson (23) peut être obturé.
